(19) Europäisches Patentamt
European Patent Office
Office européen des brevets

(11) Numéro de publication: **0 250 342 B1**

(12) # FASCICULE DE BREVET EUROPEEN

(45) Date de publication du fascicule du brevet: **25.07.90**

(51) Int. Cl.⁵: **C22B 21/00**, C22B 7/00, C01D 15/04, C22B 3/00

(21) Numéro de dépôt: **87420154.4**

(22) Date de dépôt: **12.06.87**

(54) **Procédé de récupération de l'aluminium et du lithium de déchets métalliques.**

(30) Priorité: **18.06.86 FR 8609548**

(43) Date de publication de la demande: **23.12.87 Bulletin 87/52**

(45) Mention de la délivrance du brevet: **25.07.90 Bulletin 90/30**

(84) Etats contractants désignés: **DE FR GB IT SE**

(56) Documents cités:
**DE-C- 961 707**
**FR-A- 845 133**
**FR-A- 1 514 312**
**US-A- 3 268 290**
**US-A- 4 073 644**
**US-A- 4 271 131**
**US-A- 4 274 834**
**US-A- 4 568 430**
**US-A- 4 588 565**

(73) Titulaire: **PECHINEY, 23, rue Balzac, F-75008 Paris(FR)**

(72) Inventeur: **Cohen, Joseph, 199 Rue du Faubourg St. Honoré, F-75008 Paris(FR)**
Inventeur: **Demange, Michel, 530 Chemin de la Combe Passy, F-74190 Le fayet(FR)**
Inventeur: **Lamerant, Jean-Michel, Rue de Versailles, F-13320 Bouc Bel Air(FR)**
Inventeur: **Septier, Louis, Le Beau Site 42 Avenue Ravanel Le Rouge, F-74400 Chamonix Mont Blanc(FR)**

(74) Mandataire: **Vanlaer, Marcel et al, PECHINEY 28, rue de Bonnel, F-69433 Lyon Cédex 3(FR)**

EP 0 250 342 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention est relative à un procédé de récupération de l'aluminium et du lithium à partir de déchets métalliques qui peuvent contenir, outre ces éléments, du magnésium et d'autres métaux tels que, par exemple, le cuivre et le zirconium.

En raison du développement de l'utilisation des alliages d'aluminium-lithium, notamment dans le domaine de l'aéronautique, se pose le problème de la récupération de ces éléments à partir de déchets de fabrication et, plus particulièrement, de copeaux d'usinage de pièces mécaniques élaborées en ces alliages.

Comme ce problème s'est posé récemment sur le plan industriel, il n'existe pas actuellement de procédés qui apportent une solution valable. Tout au plus, peut-on citer le brevet US 2 977 185 relatif à un procédé de récupération et de séparation du lithium et de l'aluminium à partir du complexe d'aluminate de lithium. Mais un tel procédé, s'il était appliqué aux déchets métalliques, nécessiterait d'abord l'oxydation desdits déchets, puis une séparation des différents éléments par voie aqueuse et enfin une réduction des oxydes purs obtenus par voie électrolytique, ce qui obligerait donc à ramener les métaux Al et Li contenus dans les déchets au niveau énergétique qu'ils ont dans leur minerai et entraînerait donc une perte d'énergie importante et par suite une dépense excessive de calories pour les valoriser.

Dans la présente invention, on a cherché, au contraire, à garder à l'aluminium, qui représente plus de 90 % de la masse des déchets, son état métallique et à mettre au point un procédé qui permette également de récupérer le lithium, dont la teneur dans les déchets peut atteindre près de 10 %, sous une forme directement utilisable. Ce sont là des avantages qui en font un procédé très économique.

Ce procédé est caractérisé en ce que l'on fond les déchets en présence d'un flux de chlorure(s) alcalin(s) et d'un agent de chloration et brasse l'ensemble, sépare l'aluminium et les métaux tels que le cuivre et le zirconium du laitier à base de chlorures qui s'est formé et récupère le chlorure de lithium dudit laitier en le traitant par un alcool.

Le procédé consiste d'abord à mettre en présence dans un four, d'une part les déchets, d'autre part un flux composé de chlorure(s) alcalin(s) et plus particulièrement de chlorure de sodium ou de chlorure de potassium ou de leurs mélanges et d'un agent de chloration. Ce flux sert, entre autres fonctions, à protéger les déchets contre l'action oxydante de l'humidité de l'air ambiant. La quantité utilisée dépend de la quantité de déchets mis en oeuvre et de la nature de l'agent de chloration. Mais, en moyenne, une proportion de flux comprise entre 15 et 30 % en poids de la masse de déchets convient. A ce flux est ajouté un agent de chloration qui, de préférence, est le chlorure d'aluminium. Sa fonction est de transformer le lithium et le magnésium en chlorures suivant les réactions :

$$3\,Li + AlCl_3 \rightarrow 3\,LiCl + Al$$
$$3\,Mg + 2\,AlCl_3 \rightarrow 3\,MgCl_2 + 2\,Al$$

La quantité utilisée est donc fonction de la teneur en lithium et en magnésium des déchets.

L'ensemble: déchets, flux et agent de chloration ayant été amené à l'état fondu, on le brasse énergiquement à l'aide, par exemple, d'un courant d'argon et on maintient la température entre 700 et 800°C de manière que les réactions décrites ci-dessus soient complètes.

Cette opération conduit à l'obtention de deux phases liquides : d'une part de l'aluminium complètement débarrassé du lithium et contenant éventuellement des éléments d'addition tels que le cuivre ou le zirconium, d'autre part, un laitier riche en LiCl contenant du $MgCl_2$, une faible proportion d'$AlCl_3$ et le NaCl et/ou KCl initial. Après séparation du laitier, l'aluminium fondu peut être utilisé directement après raffinage par électrolyse trois couches. Mais on préfère le traiter par une quantité calculée de chlore et de NaCl et/ou KCl de manière à reconstituer la quantité de flux et d'agent de chloration suffisante pour traiter une nouvelle quantité de déchets. On fabrique ainsi de l'$AlCl_3$ in situ et on n'a pas alors à recourir à l'utilisation d'$AlCl_3$ du commerce qui est un produit relativement cher.

Ce traitement s'effectue soit dans un four identique au précédent ou dans tout autre four, à une tempéreture voisine de 800°C en injectant le chlore au moyen, par exemple, d'une canne en graphite munie de petits trous. Sous l'action de ce gaz, une partie de l'aluminium est transformée en $AlCl_3$ et le laitier constitué par ce chlorure et le flux de NaCl et/ou KCl est séparé du bain d'aluminium et envoyé au traitement des déchets. L'aluminium restant et qui constitue la majeure partie de l'aluminium mis en oeuvre est alors raffiné par électrolyse trois couches ou par tout autre moyen convenable.

Il est évident que toutes ces phases peuvent être réalisées dans un même four et que ce procédé est particulièrement bien adapté à une marche en continu puisque fonctionnant à contre-courant réel.

En variante, on utilise le chlore comme agent de chloration au lieu du chlorure d'aluminium. On obtient également un aluminium débarrassé de son lithium et de son magnésium, mais on forme simultanément une quantité importante d'$AlCl_3$, de sorte que si on traitait directment le laitier formé, on perdrait une quantité relativement importante d'aluminium. C'est pourquoi, après séparation du métal dudit laitier et avant de le traiter par l'alcool, on introduit dans ce dernier une quantité de déchets à l'état liquide telle que le lithium contenue puisse être transformé en LiCl à partir de l'$AlCl_3$ contenu. On forme ainsi une nouvelle quantité de métal débarrassé de Li et le laitier ne contenant plus alors qu'une faible quantité de $AlCl_3$ peut alors être traité pour en récupérer le lithium.

Dans cette variante, les déchets sont fondus sous un flux de NaCl et/ou KCl fondu, puis on injecte le chlore qui assure le brassage du mélange. La température est maintenue entre 700 et 800°C pendant cette opération.

Après séparation du métal, on ajoute progressivement au laitier des déchets en brassant au moyen d'un courant d'argon et en maintenant la température entre 750 et 800°C. Cette variante est plus simple à mettre en oeuvre de façon discontinue car il s'agit plutôt d'une marche à courants parallèles à deux étages.

Dans une autre variante utilisant le chlore comme agent de chloration et où on obtient donc, d'une part de l'aluminium débarrassé de son lithium et, d'autre part, un laitier riche en $AlCl_3$, le procédé consiste à recycler à la chloration une partie dudit laitier de sorte qu'on peut éviter l'utilisation du flux de NaCl et/ou KCl, les chlorures de lithium, de magnésium et d'aluminium constituant ce laitier jouent alors le rôle de flux.

Le procédé de l'invention comporte également une phase de récupération du lithium comportant un traitement par l'alcool du laitier séparé de l'aluminium purifié et préalablement écaillé, de manière à en extraire le lithium sous une forme directement utilisable dans un procédé industriel qui, en l'occurrence, est l'électrolyse. Cet alcool a pour fonction de solubiliser le chlorure de lithium contenu dans le laitier. C'est, de préférence, un alcool aliphatique comportant 1 à 8 atomes de carbone, parmi lesquels le méthanol et l'éthanol s'avèrent être les meilleurs solvants et les plus intéressants du point de vue économique. Pour éviter que cet alcool solubilise le chlorure d'aluminium qui a pu se former lors de la chloration, et que ce dernier chlorure ne dégrade l'alcool en dégageant de la chaleur et de l'HCl, on opère en présence d'un hydroxyde alcalin anhydre tel que la soude, la potasse ou la lithine qui a pour effet de transformer les chlorures autres que le LiCl en hydroxyde, selon les réactions qui dans le cas de la potasse sont les suivantes :

$$AlCl_3 + 3\ KOH \longrightarrow Al\ (OH)_3 \searrow + 3\ KCl$$

$$MgCl_2 + 2\ KOH \longrightarrow Mg\ (OH)_2 \searrow + 2\ KCl$$

Une telle réaction s'applique éventuellement au chlorure de zirconium qui aurait pu se former lors de la chloration.

Etant donnée l'absence de réaction entre LiCl et l'hydroxyde alcalin, on peut utiliser ce dernier en quantité excédentaire par rapport à la stoechiométrie des autres chlorures.

Pratiquement, l'hydroxyde alcalin est préalablement dissous dans l'alcool et la liqueur ainsi obtenue est mélangée au laitier pendant le temps suffisant à la dissolution du LiCl et en utilisant tout moyen connu facilitant l'échange entre la phase liquide et la phase solide.

La solution alcoolique de LiCl est alors séparée des hydroxydes et éventuellement des autres chlorures alcalins insolubles, par filtration, puis soumise à l'évaporation pour donner par cristallisation du LiCl solide qui servira de matière première à la fabrication du lithium par électrolyse tandis que l'alcool après condensation peut être recyclé au traitement du laitier.

Quant aux résidus de filtration constitués par les hydroxydes et les chlorures alcalins, ils peuvent être repris par l'eau et filtrés pour donner une solution de chlorure alcalin éventuellement recyclable après évaporation/cristallisation et des hydroxydes de Mg, Al, Zr également récupérables.

Suivant une variante 1, la phase de traitement du laitier peut également être réalisée de la manière suivante :

Le laitier à l'état liquide est mélangé avec une quantité de carbonate de lithium en quantité stoéchiométrique correspondant aux réactions suivantes :

$$Li_2CO_3 + MgCl_2 \longrightarrow CO_2 \nearrow + 2\ LiCl + MgO$$

$$3Li_2CO_3 + 2AlCl_3 \longrightarrow 3CO_2 \nearrow + 6LiCl + Al_2O_3$$

Les produits ainsi obtenus et le LiCl initial sont alors refroidis et écaillés puis traités par l'alcool comme précédemment et en présence d'une très faible quantité d'hydroxyde alcalin correspondant à la très petite quantité d'$AlCl_3$ qui n'aurait pas réagi avec le carbonate de lithium.

Dans ces conditions, on obtient des oxydes sous une forme physique non gélatineuse et donc beaucoup plus facile à séparer du liquide que les hydroxydes correspondants à l'issue de la dissolution sélective de LiCl dans l'alcool; on fait également une économie importante d'hydroxyde tout en augmentant la quantité de chlorure de lithium récupéré.

Suivant une variante 2, le laitier à l'état liquide est traité non plus par une quantité de carbonate correspondant à la stoéchiométrie des réactions précédentes, mais par une quantité excédentaire. On forme donc comme précédemment du LiCl à partir de $MgCl_2$ et $AlCl_3$ puis, dans le mélange fondu résultant, on injecte une quantité de chlore suffisante pour transformer le carbonate restant en chlorure suivant la réaction:

$Li_2CO_3 + Cl_2 \rightarrow 2LiCl + CO_2 + 1/2\ O_2$

Dans ces conditions, on obtient une quantité de LiCl correspondant à la fois au LiCl provenant du lithium des déchets, au LiCl formé par la réaction du carbonate sur $AlCl_3$ et $MgCl_2$ et au LiCl résultant de la chloration de l'excès de carbonate.

Si on a calculé l'excès de manière à aboutir à une quantité finale de chlorure correspondant à celle dont on a besoin pour fabriquer des alliages A1-Li, on transforme ainsi l'installation de traitement de déchets en une installation de fabrication, ce qui a l'avantage de ne nécessiter qu'une seule installation pour exercer les fonctions récupération et production.

Suivant une variante 3, applicable notamment au procédé de chloration avec le chlore et dans lequel on recycle une partie du laitier qui constitue ainsi le flux, la partie du laitier non recyclée est traitée à l'état liquide par du carbonate de lithium en quantité stoéchiométrique correspondante aux réactions décrites ci-dessus. On forme ainsi une suspension de MgO et de $A1_2O_3$ dans du LiCl dont on sépare les phases à chaud sur un filtre en tissu de carbone par exemple. La phase LiCl est traitée par le chlore pour transformer le $Li_2CO_3$ ou le $Li_2O$ qui peut subsister en LiCl et ce dernier est envoyé à l'électrolyse. La phase solide constituée par le MgO et l'$Al_2O_3$ étant néanmoins imprégnée d'une quantité notable de LiCl est alors refroidie, broyée et traitée par l'alcool pour en extraire comme ci-dessus le LiCl seul également envoyé à l'électrolyse tandis que l'alcool est recyclé ainsi que les oxydes éventuellement.

L'invention sera mieux comprise à l'aide de la figure 1 ci-jointe qui reproduit le cheminement des produits lors de la mise en oeuvre du procédé suivant les différentes voies décrites ci-dessus.

Pour en faciliter l'examen, on a représenté:

- en traits pleins le procédé incluant la chloration par le chlorure d'aluminum et le stade de purification du LiCl par un hydroxyde alcalin anhydre;
- en tirets, le procédé incluant la chloration par le chlore (variante O);
- en traits points, le stade de purification du LiCl par une quantité stoéchiométrique de carbonate de lithium (variante 1);
- en pointillés, le stade de purification et de fabrication de LiCl par un excès de carbonate de lithium (variante 2).
- en traits-deux points, le procédé de chloration par le chlore avec recyclage du laitier (variante 3).

Suivant la 1ère voie, les déchets So sont fondus et brassés en A avec un flux L1 contenant du chlorure de potassium et/ou du chlorure de sodium et du chlorure d'aluminium au moyen d'un courant d'argon Ar pour donner un liquide L2 que l'on sépare dans l'étape B en 2 phases liquides : une phase L3 essentiellement métallique et une phase L4 surnageant constituée par le laitier. La phase L3 est soumise à une chloration au stade C à l'aide d'un courant de chlore $Cl_2$ et en présence de NaCl et/ou KCl en quantités convenables pour assurer le traitement des déchets mis en oeuvre en A.

L'ensemble L5 des deux phases liquides est alors séparé en D pour donner une phase liquide L1 contenant NaCl et/ou KCl et le chlorure d'aluminium qui est envoyée en A et un alliage d'aluminium L6 qu'on raffine en E par électrolyse ignée trois couches pour donner un aluminium L7.

De son côté, le laitier liquide L4 sortant de B est refroidi et écaillé en F pour donner un solide S1 que l'on mélange en G avec le liquide L8 formé de méthanol et d'un hydroxyde alcalin tel que la soude, la potasse, la lithine seule ou en mélange. La suspension S2 sortant de G est séparée en H en une phase solide S3 formée de KCl et/ou NaCl, $Al(OH)_3$ et $Mg(OH)_2$ qui peut être récupérée et une phase liquide L9 de laquelle on évapore en I le méthanol qui est condensé et recyclé en G après avoir redissous une base alcaline anhydre S4. Le résidu d'évaporation S5 constitué par du LiCl pur et anhydre est alors électrolysé en J pour donner du lithium métal S6.

Suivant la variante O de traitement de chloration, les déchets Soo sont fondus et brassés en K en présence du solide Sol constitué par du NaCl et/ou KCl et de chlore $Cl_2$ pour donner un liquide Lo1 qui est séparé en L en un métal Lo2 directement raffinable par électrolyse en E et le laitier Lo3 chargé en $AlCl_3$. Ce dernier est brassé en M avec de nouveaux déchets Soo pour donner un liquide Lo4 que l'on sépare dans la phase N en un métal Lo5 envoyé à l'électrolyse et le laitier Lo6 débarassé de la plus grande partie de son $AlCl_3$ et qui est envoyé en F pour être refroidi et écaillé puis traité par l'alcool.

Suivant la variante 1 de traitement de purification du LiCl, le laitier L10 équivalent à L4 ou Lo6 est mélangé en O avec du carbonate de lithium S10. Il en résulte un dégagement de $CO_2$ et une suspension S11 qui est refroidie et écaillée en P pour donner un solide S12 qui est mélangé en Q avec de la soude anhydre S13 en quantité correspondante à la transformation de $AlCl_3$ n'ayant pas réagi en hydroxyde et à du méthanol L11 pour donner une suspension S14 qui est séparée en R en une phase solide S15 contenant KCl, $Al_2O_3$, MgO qui est rejetée ou recyclée et une phase liquide L12 qui est évaporée en I pour donner du LiCl anhydre S5 et du méthanol L11 que l'on recycle.

Suivant la variante 2, le laitier L20 issu de B et équivalent à L4 ou Lo6 est mélangé en S avec un excès de carbonate de lithium S20 et donne lieu à dégagement de $CO_2$ et à la formation d'une suspension S21 que l'on chlore en T pour donner une suspension S22 d'$Al_2O_3$, MgO dans un liquide contenant KCl et LiCl. Cette suspension est refroidie et écaillée en U pour donner un solide S23 qui est mélangé en V avec du méthanol L21 en provenance de l'évaporateur I. La suspension S24 est envoyée dans le séparateur R du circuit de la variante 1 où elle est soumise aux étapes ultimes du procédé.

Suivant la variante 3, les déchets S30 sont fondus et chlorés en W sous un flux de LiCl-$MgCl_2$-$AlCl_3$ pour donner un mélange liquide L30 qui est séparé en X en un courant d'aluminium S31 envoyé en E pour être raffiné par électrolyse et en un flux L31 dont une partie est recyclée en W tandis que l'autre partie

est envoyée en Y où elle est mélangée à l'état liquide avec du carbonate de lithium S32.
De Y s'échappe du $CO_2$ et on recueille une suspension S33 de laquelle on sépare dans le filtre Z une phase liquide L32 et un solide S34. Ce liquide L32, constitué de LiCl et d'un peu de $Li_2CO_3$ ou $Li_2O$ résultant de l'excès de $Li_2CO_3$, est traité par le chlore en $\alpha$ pour transformer $Li_2CO_3$ ou Li20 en LiCl et l'ensemble du LiCl L33 est envoyé à l'électrolyse J.
Le solide S34 constitué de MgO, $Al_2O_3$ imprégnés de LiCl est refroidi et broyé en $\beta$ pour donner un solide S35 que l'on mélange à de l'alcool L34 en $\gamma$ pour donner une suspension S36 que l'on sépare en $\delta$ en une phase solide S37 et un liquide L35 qu'on évapore en $\varepsilon$ pour donner du LiCl S38 envoyé à l'électrolyse J et de l'alcool L34 qui est recyclé.

L'invention peut être illustrée à l'aide des exemples d'application suivants:

Exemple 1 (relatif à la chloration par $AlCl_3$)

Dans le creuset en corindon fritté d'un four à gaz, on introduit 1800 g d'un flux de synthèse composé de 52 % en poids de $AlCl_3$ et de 48 % en poids de KCl. Ce flux est fondu et porté à 600°C. On y introduit alors progressivement 500 kg d'un alliage aluminium-lithium en copeaux de composition: Li= 1,88% - Mg= 1,40% - Cu= 2,18% - Al= 94,54% tout en laissant la température monter jusqu'à 850°C. Lorsque tout l'alliage est à cette température, on injecte dans le bain de l'argon par une lance en graphite pendant 10 minutes. Le laitier résultant est séparé du métal et on analyse ces deux produits. Les résultats obtenus sont les suivants:
Métal = 500,4 kg; Li = 0,002%; Mg = 0,003%; Al = 97,8%; Cu =2,2%.
Laitier : 177 kg; LiCl = 32,1%; $MgCl_2$ = 15,7%; $AlCl_3$ = 3,4%; KCl= 48,8%.

On introduit alors dans le bain métallique 85 kg de KCl que l'on fond. Puis, on insuffle 24 $Nm^3$ de chlore gazeux avec un débit de 1,3 $Nm^3$/min en maintenant la température entre 795 et 810°C en remplaçant, si la température monte trop, le chlore par de l'argon. On obtient alors:
Métal = 468,9 kg; Li < 0,001%; Mg < 0,001 %; Al= 97,6 %, Cu= 2,3 %.
Flux = 176,3 kg; $AlCl_3$ = 51,5%; KCl= 48 %; LiCl+$MgCl_2$= 0,015%.
Ce flux qui a une composition voisine de celle du flux initial peut servir au traitement de nouveaux déchets. Quant au métal obtenu, on constate que sa teneur en lithium et magnésium est très faible.

Exemple 2

Dans le même four que dans l'exemple 1, on introduit 300 kg du même alliage que dans l'exemple 1 sous une couverture de 85 kg de KCl liquide. On fond l'alliage à 700°C. On injecte alors 29 $Nm^3$ de chlore avec un débit de 1,4 $m^3$/min en maintenant la température entre 730 et 770°C. L'analyse des deux phases obtenues donne pour résultats:
Métal: 277 kg; Li et Mg: indosables; A1= 97,7%, Cu= 2,3 %.
Laitier: 198,6 kg; LiCl= 17,3%; $MgCl_2$= 8,2%; $AlCl_3$= 31,9%; KCl= 42,6%.
On constate que le laitier contient une forte proportion d'$AlCl_3$. Le métal est récupéré. Dans le laitier restant, on ajoute progressivement une nouvelle charge d'alliage Al-Li liquide (300 kg). Cette charge est fondue et portée à 790°C. A fusion, on souffle de l'argon à 1,5 $m^3$/min pendant 10 minutes. On obtient:
Métal: 302 kg; Li= 0,003%; Mg=0,005%; A1= 97,8%; Cu= 2,2%.
Laitier: 189,5 kg; LiCl= 36,1%; $MgCl_2$= 17,2%; $AlC1_3$= 2,2%; KCl= 44,6%.

On constate que le laitier contient une faible quantité d'$AlCl_3$ et peut être traité par l'alcool pour en extraire le lithium sans occasion ner de perte importante d'aluminium.

Exemple 3 (relatif à l'extraction du lithium)

108 kg de laitier ont été écaillés, broyés à sec et passés au tamis 800 um. L'analyse a donné la composition suivante:
KCl: 68,5%; LiCl: 22,2%; $AlCl_3$: 2,4%; $MgCl_2$:1,4%; divers: 5,5%.
Ce laitier a été traité par 150 l d'éthanol pur, dans lequel on avait préalablement dissous 5,5 kg de potasse solide. Après agitation pendant 1 heure du mélange de ces produits, on a filtré la suspension obtenue dans un filtre à pression garni d'éléments papier de faible porosité. Avec 0,5 $10^5$Pa de pression d'azote sec, on obtient un temps de filtration de 45 secondes. Le gâteau est alors lavé avec 50 l d'éthanol et essoré 30 secondes. La solution claire sortant du filtre est alors évaporée. On obtient ainsi 2,4 kg de cristaux blancs de LiCl ayant pour analyse.
LiCl : 99,33 %; KCl : 0,23 %; Mg : 0,006 %; Al : 0,03%; Cu : 0,0006 %.

Cette invention trouve son application dans la valorisation de l'aluminium et du lithium contenus dans les déchets de fabrication d'Al-Li et, plus particulièrement, de copeaux d'usinage de pièces mécaniques élaborées en ces alliages.

**Revendications**

1. Procédé de récupération de l'aluminium et du lithium de déchets métalliques qui peuvent contenir, outre ces éléments, du magnésium et d'autres métaux tels que le cuivre et le zirconium caractérisé en ce que l'on fond les déchets en présence d'un flux de chlorure(s) alcalin(s) et d'un agent de chloration et brasse l'ensemble, sépare l'aluminium et les métaux tels que le cuivre et le zirconium du laitier à base de chlorures de lithium, de magnésium et d'aluminium, qui s'est formé et récupère le chlorure de lithium dudit laitier en le traitant par un alcool après avoir transformé les autres chlorures en oxyde ou en hydroxyde.

2. Procédé selon la revendication 1, caractérisé en ce que l'agent de chloration est le chlorure d'aluminium.

3. Procédé selon la revendication 2, caractérisé en ce que le brassage est obtenu par injection d'argon.

4. Procédé selon la revendication 2, caractérisé en ce que l'aluminium récupéré est partiellement chloré par le chlore en présence de KCl et/ou NaCl pour reconstituer l'agent de chloration.

5. Procédé selon la revendication 1, caractérisé en ce que l'agent de chloration est le chlore.

6. Procédé selon la revendication 5, caractérisé en ce que, avant de le traiter par un alcool, on introduit dans le laitier chaud riche en $AlCl_3$ une quantité de déchets à l'état liquide telle que le lithium contenu puisse être transformé en LiC1 à partir d'$AlCl_3$ puis on sépare les métaux résultants.

7. Procédé selon la revendication 5 caractérisé en ce que l'on recycle une partie du laitier chaud pour former le flux en présence duquel on fond les déchets.

8. Procédé selon la revendication 1, caractérisé en ce que l'aluminium récupéré est raffiné par électrolyse trois couches.

9. Procédé selon la revendication 1, caractérisé en ce que lors de la récupération du lithium, le laitier est refroidi, écaillé, agité avec au moins un alcool aliphatique en présence d'un hydroxyde alcalin anhydre, pour donner un mélange dont la phase liquide est séparée et évaporée afin de récupérer le LiCl seul tandis que l'alcool est recyclé.

10. Procédé selon la revendication 1, caractérisé en ce que lors de la récupération du lithium le laitier chaud est mélangé avec du carbonate de lithium en quantité stoéchiométrique correspondant à la décomposition des chlorures d'Al et de Mg, les produits résultants sont refroidis, écaillés et agités avec au moins un alcool aliphatique en présence d'une petite quantité d'hydroxyde alcalin anhydre pour donner un mélange dont la phase liquide est séparée et évaporée pour récupérer le LiCl seul tandis que l'alcool est recyclé.

11. Procédé selon la revendication 1, caractérisé en ce que lors de la récupération du lithium, le laitier est mélangé avec un excès de carbonate de lithium, puid chloré de manière à transformer complètement le carbonate en chlorure, les produits résultants sont refroidis, écaillés et agités avec au moins un alcool aliphatique pour donner un mélange dont la phase liquide est séparée et évaporée pour récupérer le LiCl seul tandis que l'alcool est recyclé.

12. Procédé selon la revendication 7, caractérisé en ce que lors de la récupération du lithium on introduit dans la partie non recyclée du laitier chaud, du carbonate de lithium en quantité stoéchiométrique correspondant à la décomposition des chlorures d'Al et de Mg, sépare à chaud le solide formé du LiCl liquide qu'on purifie par chloration et traite le solide refroidi et broyé par l'alcool pour donner un mélange dont la phase liquide est séparée et évaporée, afin de récupérer le LiCl seul tandis que l'alcool est recyclé.

13. Procédé selon les revendications 9, 10, 11 et 12 caractérisé en ce que l'alcool aliphatique est un alcool comportant de 1 à 8 atomes de carbone.

14. Procédé selon la revendication 12 caractérisé en ce que l'alcool est le méthanol.

15. Procédé selon la revendication 9 caractérisé en ce que l'hydroxyde acalin appartient au groupe constitué par la soude, la potasse, la lithine.

16. Procédé selon les revendications 9, 10, 11 et 12 caractérisé en ce que le LiCl est réduit à l'état métallique par électrolyse.

**Patentansprüche**

1. Verfahren zum Rückgewinnen von Aluminium und Lithium aus metallischen Abfällen, die außer diesen Elementen Magnesium und andere Metalle, wie Kupfer und Zirkonium, enthalten können, dadurch gekennzeichnet daß man die Abfälle in Gegenwart eines Flußmittels aus Alkalichlorid(en) und eines Chlorierungsmittels schmilzt und das Ganze rührt, das Aluminium und die Metalle, wie das Kupfer und das Zirkonium, von der Schlacke auf Basis von Lithium-, Magnesium- und Aluminiumchloriden, die sich gebildet hat, abtrennt und das Lithiumchlorid dieser Schlacke rückgewinnt, indem man sie mit einem Alkohol behandelt, nachdem man die anderen Chloride in Oxid oder in Hydroxid umgewandelt hat.

2. Verfahren nach dem Anspruch 1, dadurch gekennzeichnet, daß das Chlorierungsmittel Aluminiumchlorid ist.

3. Verfahren nach dem Anspruch 2, dadurch gekennzeichnet, daß das Rühren durch Einblasen von Argon erhalten wird.

4. Verfahren nach dem Anspruch 2, dadurch gekennzeichnet, daß das rückgewonnene Aluminium teilweise durch Chlor in Gegenwart von KCl und/oder NaCl chloriert wird, um das Chlorierungsmittel wiederherzustellen.

5. Verfahren nach dem Anspruch 1, dadurch gekennzeichnet, daß das Chlorierungsmittel Chlor ist.

6. Verfahren nach dem Anspruch 5, dadurch gekennzeichnet, daß man in die an $AlCl_3$ reiche, heiße Schlacke vor deren Behandlung mit einem Alkohol eine solche Menge von Abfällen im flüssigen Zustand einführt, daß das enthaltene Lithium ausgehend von $AlCl_3$ in LiCl umgewandelt werden kann, und dann die erhaltenen Metalle abtrennt.

7. Verfahren nach dem Anspruch 5, dadurch gekennzeichnet, daß man einen Teil der heißen Schlacke zum Bilden des Flußmittels rückführt, in dessen Gegenwart man die Abfälle schmilzt.

8. Verfahren nach dem Anspruch 1, dadurch gekennzeichnet, daß das rückgewonnene Aluminium durch Dreischicht-Elektrolyse raffiniert wird.

9. Verfahren nach dem Anspruch 1, dadurch gekennzeichnet, daß bei der Rückgewinnung des Lithiums die Schlacke abgekühlt, abgestreift und mit wenigstens einem aliphatischen Alkohol in Gegenwart eines wasserfreien Alkalihydroxlds gerührt wird, um eine Mischung zu ergeben, deren flüssige Phase abgetrennt und verdampft wird, um nur das LiCl rückzugewinnen, während der Alkohol rückgeführt wird.

10. Verfahren nach dem Anspruch 1, dadurch gekennzeichnet, daß bei der Rückgewinnung des Lithiums die heiße Schlacke mit Lithiumkarbonat in der Zersetzung der Al- und Mg-Chloride entsprechender stöchiometrischer Menge vermischt wird, die erhaltenen Stoffe abgekühlt, abgestreift und mit wenigstens einem aliphatischen Alkohol in Gegenwart einer kleinen Menge von wasserfreiem Alkalihydroxid gerührt werden, um eine Mischung zu ergeben, deren flüssige Phase abgetrennt und verdampft wird, um nur das LiCl rückzugewinnen, während der Alkohol rückgeführt wird.

11. Verfahren nach dem Anspruch 1, dadurch gekennzeichnet, daß bei der Rückgewinnung des Lithiums die Schlacke mit einem Überschuß von Lithiumkarbonat vermischt und dann derart chloriert wird, um das Karbonat völlig in Chlorid umzuwandeln, die erhaltenen Stoffe abgekühlt, abgestreift und mit wenigstens einem aliphatischen Alkohol gerührt werden, um eine Mischung zu ergeben, deren flüssige Phase abgetrennt und verdampft wird, um nur das LiCl rückzugewinnen, während der Alkohol rückgeführt wird.

12. Verfahren nach dem Anspruch 7, dadurch gekennzeichnet, daß man bei der Rückgewinnung des Lithiums in den nicht rückgeführten Teil der heißen Schlacke Lithiumkarbonat in der Zersetzung der Al- und Mg-Chloride entsprechender stöchiometrischer Menge einführt, in der Hitze den gebildeten Feststoff vom flüssigen LiCl abtrennt, das man durch Chlorierung reinigt, und den abgekühlten und zerkleinerten Feststoff mit Alkohol behandelt, um eine Mischung zu erhalten, deren flüssige Phase abgetrennt und verdampft wird, um nur das LiCl rückzugewinnen, während der Alkohol rückgeführt wird.

13. Verfahren nach den Ansprüchen 9, 10, 11 und 12, dadurch gekennzeichnet, daß der aliphatische Alkohol ein Alkohol mit 1 bis 8 Kohlenstoffatomen ist.

14. Verfahren nach dem Anspruch 12, dadurch gekennzeichnet, daß der Alkohol Methanol ist.

15. Verfahren nach dem Anspruch 9, dadurch gekennzeichnet, daß das Alkalihydroxid zu der aus Natriumhydroxid, Kaliumhydroxid, Lithiumhydroxid gebildeten Gruppe gehört.

16. Verfahren nach den Ansprüchen 9, 10, 11, und 12, dadurch gekennzeichnet, daß das LiCl durch Elektrolyse in den metallischen Zustand reduziert wird.

## Claims

1. Process for the recovery of aluminium and lithium from metal waste which may contain, in addition to these elements, magnesium and other metals such as copper and zirconium, characterised in that the waste is melted in the presence of a flux of one or more than one alkali metal chloride and a chlorinating agent and the components are mixed together, the aluminium and the metals such as copper and zirconium are separated from the lithium, magnesium and aluminium chloride-based slag formed in the process and lithium chloride is recovered from the slag by treatment with an alcohol after transformation of the other chlorides into oxide or hydroxide.

2. Process according to claim 1, characterised in that the chlorinating agent is aluminium chloride.

3. Process according to claim 2, characterised in that mixing is achieved by injection of argon.

4. Process according to claim 2, characterised in that the recovered aluminium is partially chlorinated with chlorine in the presence of KCl and/or NaCl to reconstitute the chlorinating agent.

5. Process according to claim 1, characterised in that the chlorinating agent is chlorine.

6. Process according to claim 5, characterised in that prior to the treatment with an alcohol, there is introduced into the hot slag rich in $AlCl_3$ a quantity of metal waste in a liquid state such that the lithium contained therein can be converted into LiCl by means of $AlCl_3$, and the resulting metals are then separated.

7. Process according to claim 5, characterised in that a proportion of the hot slag is recycled to form the flux in the presence of which the metal waste is melted.

8. Process according to claim 1, characterised in that the aluminium recovered is refined by three-layered electrolysis.

9. Process according to claim 1, characterised in that in the process of recovery of the lithium, the slag is cooled, scaled and agitated with at least one aliphatic alcohol in the presence of an anhydrous alkali metal hydroxide to give rise to a mixture of which the liquid phase is separated and evaporated to recover LiCl alone while the alcohol is recycled.

10. Process according to claim 1, characterised in that in the process of recovery of lithium, the hot slag is mixed with lithium carbonate in a stoichiometric quantity corresponding to that required for the decomposition of the chlorides of aluminium and magnesium, and the resulting products are cooled, scaled and stirred together with at least one aliphatic alcohol in the presence of a small quantity of anhydrous alkali metal hydroxide to give rise to a mixture from which the liquid phase is separated and evaporated to recover LiCl alone while the alcohol is recycled.

11. Process according to claim 1, characterised in that in the process of recovery of the lithium, the slag is mixed with an excess of lithium carbonate and then chlorinated for complete conversion of the carbonate into chloride and the resulting products are cooled, scaled and stirred up with at least one aliphatic alcohol to give rise to a mixture from which the liquid phase is separated and evaporated for recovery of the LiCl alone while the alcohol is recycled.

12. Process according to claim 7, characterised in that in the process of recovery of the lithium, lithium carbonate is introduced into that part of the hot slag which is not recycled, in a quantity which is stoichiometric with respect to the decomposition of the chlorides of Al and Mg, and the solid formed is separated hot from the liquid LiCl which is purified by chlorination, and the cooled and crushed solid is treated with alcohol to form a mixture from which the liquid phase is separated and evaporated so that LiCl is recovered alone while the alcohol is recycled.

13. Process according to claims 9, 10, 11 and 12, characterised in that the aliphatic alcohol is an alcohol containing 1 to 8 carbon atoms.

14. Process according to claim 12, characterised in that the alcohol is methanol.

15. Process according to claim 9, characterised in that the alkali metal hydroxide belongs to the group comprising sodium hydroxide, potassium hydroxide and lithium hydroxide.

16. Process according to claims 9, 10, 11, and 12, characterised in that LiCl is reduced to the metallic state by electrolysis.

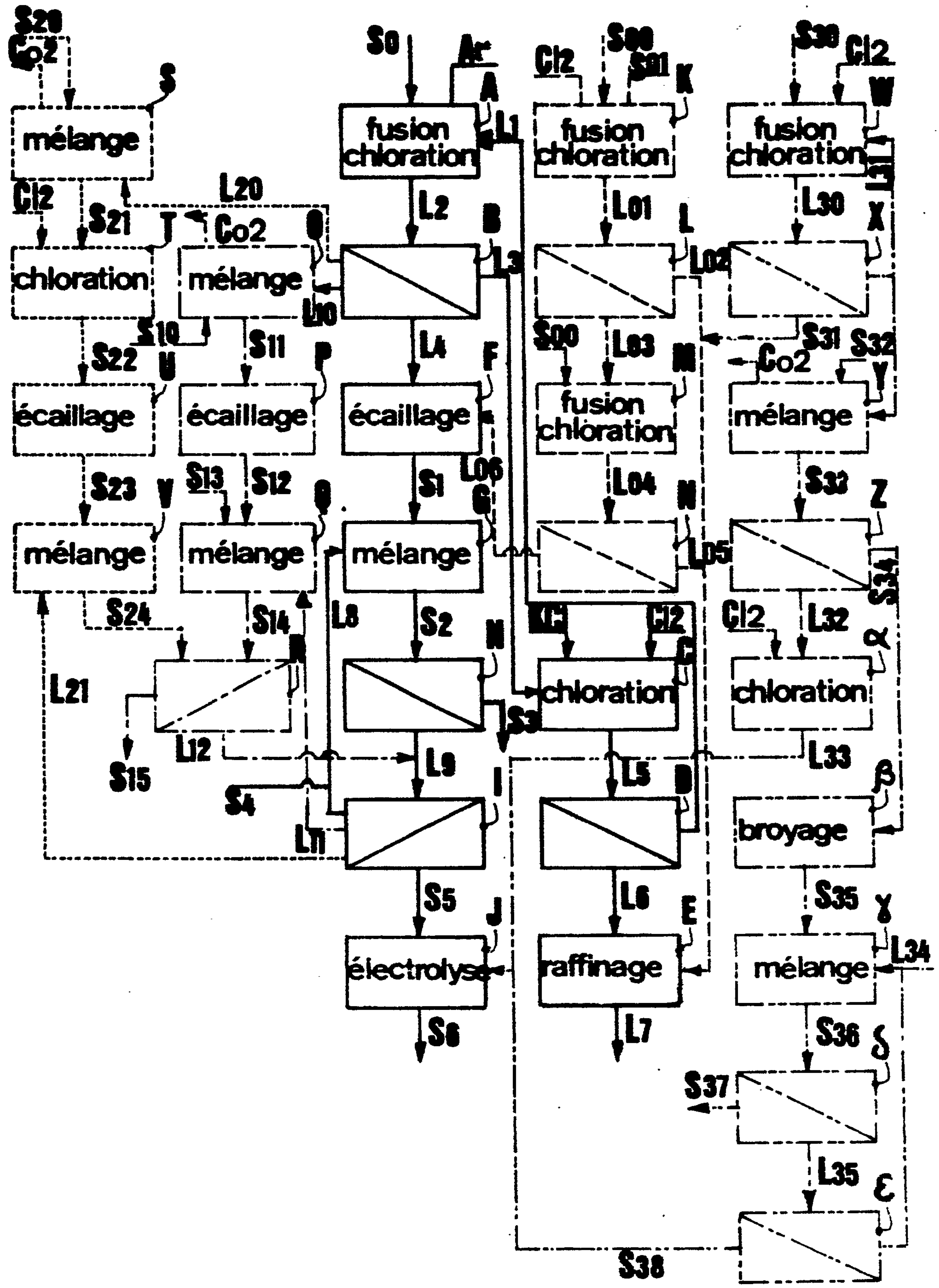
S20
Co2
S
mélange
Cl2
S21
T
Co2
L20
O
chloration
mélange
S10
S11
L10
S22
U
P
écaillage
écaillage
S23
V
S13
S12
Q
mélange
mélange
S24
S14
R
L21
L12
S15
S4
L11
S0
Ar
A
fusion chloration
L1
L2
B
L3
L4
F
écaillage
S1
L06
G
mélange
L8
S2
H
S3
L9
I
S5
J
électrolyse
S6
Cl2
S00
S01
K
fusion chloration
L01
L
L02
S00
L03
M
fusion chloration
L04
N
L05
KCl
Cl2
C
chloration
L5
D
L6
E
raffinage
L7
S30
Cl2
W
fusion chloration
L31
L30
X
S31
S32
Co2
Y
mélange
S33
Z
S34
Cl2
L32
α
chloration
L33
β
broyage
S35
γ
L34
mélange
S36
δ
S37
L35
ε
S38